Europäisches Patentamt

(19) European Patent Office

Office européen des brevets

(11) Numéro de publication: **0 223 654**
**B1**

(12) **FASCICULE DE BREVET EUROPEEN**

(45) Date de publication du fascicule du brevet:
**27.12.90**

(21) Numéro de dépôt: **86402260.3**

(22) Date de dépôt: **10.10.86**

(51) Int. Cl.⁵: **F04B 51/00**, F04B 39/00,
G01N 17/00

(54) **Procédé de détermination d'un matériau composite constitutif des pièces en mouvement d'un compresseur frigorifique hermétique, et compresseur frigorifique hermétique comprenant des pièces déterminées par ce procédé.**

(30) Priorité: **16.10.85 FR 8515305**

(43) Date de publication de la demande:
**27.05.87 Bulletin 87/22**

(45) Mention de la délivrance du brevet:
**27.12.90 Bulletin 90/52**

(84) Etats contractants désignés:
**AT ES FR IT**

(56) Documents cités:
**GB-A- 1 232 823**
**US-A- 4 046 002**

(73) Titulaire: **L'UNITE HERMETIQUE S.A., Route de Lyon,**
**F-38290 La Verpilliere(FR)**

(72) Inventeur: **Venditelli, Serge, THOMSON-CSF**
**SCPI 19, avenue de Messine, F-75008 Paris(FR)**

(74) Mandataire: **Phan, Chi Quy et al, THOMSON-CSF SCPI,**
**F-92045 PARIS LA DEFENSE CEDEX 67(FR)**

ACTORUM AG

## Description

L'invention est relative à un procédé pour déterminer un matériau composite constitutif de pièces en mouvement, telles que les vilebrequins, les bielles, les pistons et les clapets, d'un compresseur frigorifique hermétique, et à un compresseur frigorifique comprenant de telles pièces en matériau composite dont la détermination a été effectuée à l'aide de ce procédé.

Dans les compresseurs frigorifiques, on a cherché depuis longtemps à réduire les masses des pièces en mouvement, notamment les vilebrequins, bielles, pistons et clapets, car celles-ci dépensent une énergie non négligeable, par rapport à l'énergie totale nécessaire à la compression du fluide frigorigène.

De plus, dans les compresseurs qui comprennent un nombre impair de pistons, il est nécessaire d'ajouter des contrepoids d'équilibrage pour réduire les forces d'inertie. Ces contrepoids ont des masses qui diminuent d'autant le rendement du compresseur.

La réduction des masses en mouvement aboutit à une réduction de la puissance nécessaire du moteur, donc du dimensionnement des bobinages, et enfin à une réduction des vibrations et du bruit.

Dans de nombreux domaines de l'industrie, on est amené à utiliser des matériaux composites, c'est-à-dire des matériaux synthétiques mélangés avec des matériaux fibreux, pour réaliser des structures de masse réduite par rapport aux anciennes solutions connues.

On est donc amené à envisager l'utilisation des matériaux composites lors de la réalisation des pièces en mouvement des compresseurs.

Cependant, si dans certaines applications l'emploi de matériaux composites ne pose pas de problèmes particuliers, il n'en est pas de même pour la réalisation de pièces de compresseurs frigorifiques hermétiques.

En effet, dans les autres domaines, le choix des matériaux est le plus souvent effectué en fonction de leurs propriétés mécaniques ou thermiques. Ainsi, par exemple lors de la réalisation d'éléments de carrosserie d'un véhicule terrestre, on insistera davantage sur les contraintes mécaniques que subiront les divers éléments. Pour la réalisation d'éléments d'isolation thermique ou d'éléments en contact avec des parties chaudes, on insistera davantage sur les contraintes thermiques.

Dans la réalisation des pièces destinées à être mises en mouvement dans les compresseurs, le matériau composite doit être déterminé en fonction de trois conditions particulières et simultanées d'utilisation.

D'une part, les pièces en mouvement subissent des contraintes mécaniques importantes ; d'autre part, la température d'utilisation est élevée, de l'ordre de 200°C ; enfin, le milieu dans lequel elles se trouvent est particulièrement agressif chimiquement.

Or, les propriétés mécaniques et physiques sont déterminées pour plusieurs températures, mais dans des milieux non corrosifs. De même, les fabricants déterminent la tenue chimique d'un matériau composite donné dans un milieu chimique donné pour plusieurs températures mais sans contraintes mécaniques. La seule connaissance des propriétés données par un fabricant ne permet donc pas de déterminer à l'avance si un matériau convient pour la réalisation des pièces de compresseurs précitées.

L'invention part de ces constatations et a pour objet un procédé permettant de déterminer un matériau composite destiné à la réalisation de pièces en mouvement dans un compresseur frigorifique hermétique, et un compresseur frigorifique hermétique comportant des pièces déterminées par ce procédé.

Selon l'invention, un procédé pour déterminer un matériau composite constitutif de pièces en mouvements dans un compresseur frigorifique hermétique, est caractérisé en ce qu'un matériau composite, dont les propriétés mécaniques et thermiques initiales annoncées pour un milieu non corrosif satisfont aux conditions engendrées par les contraintes mécaniques et thermiques dans un compresseur, est placé pendant une première durée (T1) déterminée dans un milieu contenant les produits chimiques qui se trouvent dans un compresseur à une température d'essai correspondant à la température maximale de fonctionnement d'un compresseur, et en ce qu'à l'expiration de cette première durée (T1), on mesure les propriétés mécaniques et chimiques, on les compare avec les propriétés mécaniques et/ou chimiques initiales, et on évalue par calcul ce qu'elles seront lorsque le matériau aura été utilisé dans une ambiance de compresseur pendant une seconde durée (T2) supérieure à la première durée (T1), et en ce qu'on réalise alors des pièces avec ce matériau si les propriétés évaluées satisfont aux propriétés requises après une durée d'utilisation à la seconde durée (T2).

Selon une autre caractéristique, l'évaluation des propriétés est faite par une durée T2 supérieure à l'espérance de vie d'un compresseur, soit 12 à 15 ans.

Le procédé de l'invention est donc particulièrement avantageux par rapport aux procédés de l'art antérieur, puisqu'après un test de durée déterminée, on ne se contente pas de vérifier les modifications des propriétés des matériaux, et de rejeter les matériaux dont les propriétés auraient été modifiées, mais puisqu'on évalue les propriétés qu'ils auront après un temps donné d'utilisation même si elles ont été modifiées à l'issue du test.

D'autres caractéristiques et avantages du procédé apparaîtront avec la description suivante.

Un matériau composite est constitué d'au moins deux éléments : un matériau synthétique encore appelé matrice de liaison, le plus souvent sous la forme d'une résine, et un matériau fibreux tel que de la fibre de verre, de la fibre de carbone.

Les matériaux peuvent être transformés, certains par injection, d'autres par compression, selon la nature et/ou le taux des fibres qui se trouvent à l'intérieur. Les fibres peuvent en effet être longues, courtes, ou se présenter sous forme de tissus.

La transformation a pour objet la réalisation des pièces, mais ne constitue pas l'objet de la présente invention.

Il est cependant intéressant de noter que les propriétés d'un matériau composite sont liées au taux de fibres, à leur nature, et à la matrice employée.

Le procédé de l'invention consiste à choisir parmi les matériaux composites connus ceux dont les propriétés mécaniques et thermiques initiales annoncées sont convenables, à vérifier par mesure si ces propriétés annoncées sont correctes et satisfont aux conditions engendrées dans les compresseurs, puis à les soumettre à un test dans un milieu contenant les produits chimiques d'un compresseur, à la température de fonctionnement d'un compresseur. A l'issue de ce test, on vérifie les propriétés chimiques et mécaniques.

Si le produit est trop altéré chimiquement, il est rejeté. Il en est de même si les propriétés mécaniques à l'issue du test sont telles qu'elles ne satisfont plus du tout aux conditions de l'ambiance dans un compresseur frigorifique.

Par contre, dès que les propriétés d'un produit à l'issue du test sont encore satisfaisantes, on les compare aux propriétés initiales et on détermine alors par calcul ce qu'elles deviendraient si le produit était utilisé dans un compresseur pendant une durée correspondant au moins à l'espérance de vie moyenne d'un compresseur, dans des conditions chimiques et thermiques extrêmes.

Tous les matériaux qui auraient alors des propriétés mécaniques et/ou chimiques insuffisantes sont rejetés.

De préférence, si une altération chimique est observée à l'issue du test, on rejette le matériau avant de déterminer les propriétés mécaniques futures.

Dans une mise en oeuvre du procédé de l'invention, après avoir choisi des matériaux composites dont les propriétés mécaniques et thermiques initiales, annoncées hors milieu agressif chimiquement, conviennent, on réalise des échantillons afin de les soumettre au test.

Le test chimique consiste à placer les échantillons dans une ambiance contenant de l'huile de lubrification de compresseur et du fluide frigorigène, à une température correspondant à la température de fonctionnement maximum des compresseurs, pendant une durée T1 déterminée.

De préférence, la température est de l'ordre de 200°C. Dans une mise en oeuvre, le test dure 7 jours, après lesquels les échantillons sont retirés.

De préférence, le test est réalisé dans le milieu le plus agressif que l'on puisse rencontrer dans un compresseur. Ainsi, on effectue par exemple le test dans un milieu contenant des huiles naphténiques et du fluide frigorigène, et on considère que si les résultats sont satisfaisants, ils le seront par exemple avec des huiles paraffiniques, parce que les produits de réaction qu'elles engendrent avec le fluide frigorigène sont moins agressifs. En effet, les huiles paraffiniques sont plus indifférentes aux agents chimiques qui les entourent, et particulièrement aux constituants du fluide frigorigène.

Parmi les nombreux matériaux composites connus, il en est très peu qui possèdent des propriétés initiales mécaniques et thermiques annoncées et vérifiées correctes et qui sont donc soumis au test.

Ainsi, on a été amené à tester des matériaux constitués de résine époxyde imprégnée, des matériaux constitués de polyamide et de verre, des matériaux constitués de polyester et de verre et des matériaux constitués de fibres de carbone et de verre avec de la résine vinyle ester. Tous ces matériaux ont été rejetés à l'issue du test en raison de l'instabilité chimique et/ou mécanique mesurée de la résine.

Enfin, d'autres matériaux ont été testés qui étaient constitués l'un de résine à base de polyester éthyle cétone, d'autres à base de résine polyimide, et d'autres enfin à base de résine polyester sulfone.

A l'issue du test, ces matériaux exhibaient encore de bonnes propriétés chimiques et mécaniques. L'évaluation des propriétés mécaniques et chimiques futures a donc été effectuée par calcul pour chacun de ces produits.

Le calcul a conduit à rejeter les matériaux à base de polyester éthyle cétone car ils exhiberaient de mauvaises propriétés mécaniques à l'issue d'une durée de fonctionnement correspondant à la durée T2 choisie par le calcul.

Le calcul a conduit à conserver un matériau constitué de résine polyimide mélangée avec 30 % de fibres de verre qui se transforme par injection.

Le calcul a amené à conserver un matériau constitué de résine polyimide et de 65 % de fibres de verre, qui est transformé par compression.

Le calcul a conduit à conserver un matériau composite constitué d'un tissu de fibres de verre préimprégné de résine polyimide et transformé après découpe, par compression et conformation.

Le calcul a permis de conserver un matériau composite constitué de résine polyester sulfone et de 30 % de fibres de verre transformable par injection.

L'invention a aussi pour objet un compresseur dont au moins l'une des pièces en mouvement est réalisée dans l'un des matériaux composites déterminés par le procédé de l'invention, qu'il s'agisse de la ou des bielles, du vilebrequin, du ou des pistons et des clapets.

Les pièces sont réalisées par injection ou par compression, selon le matériau composite déterminé.

**Revendications**

1. Procédé pour déterminer un matériau composite constitutif de pièces en mouvements dans un compresseur frigorifique hermétique, caractérisé en ce qu'un matériau composite dont les propriétés mécaniques et thermiques initiales annoncées pour un milieu non corrosif satisfont aux conditions engendrées par les contraintes mécaniques et thermiques dans un compresseur, est placé pendant une première durée (T1) déterminée dans un milieu contenant les produits chimiques qui se trouvent dans un compresseur à une température d'essai correspondant à la température maximale de fonctionnement d'un compresseur, et en ce qu'à l'expiration de cette première durée (T1), on mesure les propriétés mécaniques et chimiques, on les compare avec les propriétés mécaniques et/ou chimiques initiales, et on évalue par calcul ce qu'elles seront lorsque le matériau aura été utilisé dans une ambiance de compresseur pendant une seconde durée (T2) supérieure à la première durée (T1), et en ce qu'on réalise alors des pièces avec ce matériau si les propriétés évaluées satisfont aux propriétés requises après une durée d'utilisation à la seconde durée (T2).

2. Procédé selon la revendication 1, caractérisé en ce que l'essai est effectué dans un milieu contenant du fluide frigorigène et de l'huile naphténique.

3. Procédé selon la revendication 1, caractérisé en ce que la seconde durée (T2) utilisée pour l'évaluation est au moins égale à l'espérance de vie d'un compresseur.

4. Procédé selon la revendication 3, caractérisé en ce que la seconde durée (T2) est de l'ordre de 15 ans.

5. Procédé selon la revendication 1, caractérisé en ce que la température d'essai est de l'ordre de 200°C.

6. Procédé selon la revendication 1, caractérisé en ce que l'essai est effectué pendant une première durée (T1) de sept jours.

7. Procédé selon la revendication 1, caractérisé en ce que l'évaluation des propriétés à la seconde durée (T2) est effectuée uniquement si les propriétés mécaniques et chimiques mesurées à l'issue de l'essai satisfont aux conditions requises à la première durée (T1) dans un compresseur.

8. Procédé selon la revendication 7, caractérisé en ce que l'évaluation des propriétés à la seconde durée (T2) est effectuée uniquement si les propriétés chimiques n'ont pas été modifiées lors de l'essai.

9. Compresseur frigorifique hermétique comprenant parmi ses pièces en mouvement au moins une bielle, un vilebrequin, un piston et des clapets, caractérisé en ce que l'une des pièces au moins est réalisée dans un matériau composite résistant aux contraintes mécaniques, aux températures et au milieu corrosif régnant dans les compresseurs pendant la durée de vie du compresseur.

10. Compresseur frigorifique hermétique selon la revendication 9, caractérisé en ce qu'au moins l'une desdites pièces en mouvement est réalisée dans un matériau composite injecté et constitué d'un mélange d'une résine polyimide et de 30% de fibres de verre.

11. Compresseur frigorifique hermétique selon la revendication 9, caractérisé en ce qu'au moins l'une desdites pièces en mouvement est réalisée dans un matériau composite compressé et constitué d'un mélange d'une résine polyimide et de 65% de fibres de verre.

12. Compresseur frigorifique hermétique selon la revendication 9, caractérisé en ce qu'au moins l'une desdites pièces en mouvement est réalisée dans un matériau composite transformé par découpe, compression et conformation et constitué d'un mélange d'un tissu de fibres de verre et d'une résine polyimide.

13. Compresseur frigorifique hermétique selon la revendication 9, caractérisé en ce qu'au moins l'une desdites pièces en mouvement est réalisée dans un matériau composite injecté et constitué d'un mélange de résine polyester sulfone et de 30% de fibres de verre.

## Claims

1. A method for determining a composite material for the manufacture of moving members in a hermetically sealed refrigerating compressor, characterized in that a composite material whose initial mechanical and thermal properties known for a noncorrosive medium satisfy conditions engendered by the mechanical and thermal effects in a compressor, is placed for a first determined time duration (T1) in a medium containing the chemical products which are found in a compressor at a test temperature corresponding to the maximum temperature of operation of a compressor and in that after the expiry of this first time duration (T1) the mechanical and chemical properties are ascertained, they are compared with the initial mechanical and/or chemical properties, and by calculation their values they will have when the material has been used in a compressor environment during a second time (T2) longer than the first time (T1) are ascertained, and in that members are made of this material if the evaluated properties satisfy the properties required after use in the second time duration (T2).

2. The method as claimed in claim 1, characterized in that the test is performed in an environment containing refrigerating fluid and naphthenic oil.

3. The method as claimed in claim 1, characterized in that the second time duration (T2) used for the evaluation is at least equal to the life expectation of a compressor.

4. The method as claimed in claim 3, characterized in that the second duration (T2) is of the order of 15 years.

5. The method as claimed in claim 1, characterized in that the test temperature is of the order of 200°C.

6. The method as claimed in claim 1, characterized in that the test is performed during a first time (T1) of seven days.

7. The method as claimed in claim 1, characterized in that the evaluation of the properties during the second time duration (T2) is only performed if the measured mechanical and chemical properties at the end of the test satisfy conditions required for the first time duration (T2) in a compressor.

8. The method as claimed in claim 7, characterized in that the evaluation of the properties in the second time duration (T2) is only effected if the chemical properties have not been modified at the time of the test.

9. A hermetically sealed refrigeration compressor whose moving parts include at least a connecting rod, a crank shaft, a piston and valves, characterized in that one of said parts at least is made of a composite material resistant to mechanical stresses, to the temperatures and to the corrosive environment obtaining in compressors during the working life of the compressor.

10. The hermetically sealed refrigeration compressor as claimed in claim 9, characterized in that at least one of the moving parts is made of an injection molded composite material composed of a mixture of a polyimide resin and 30% of glass fiber.

11. The hermetically sealed refrigeration compressor as claimed in claim 9, characterized in that at least one of the said moving parts is made of a compressed composite material constituted by a mixture of polyimide resin and 65% glass fiber.

12. The hermetically sealed refrigeration compressor as claimed in claim 9, characterized in that the at least one of the said moving parts is made of a composite material processed by being cut, compressed and adapted and is constituted of a mixture of glass fiber tissue and of a polyimide resin.

13. The hermetically sealed refrigerator as claimed in claim 9, characterized in that at least one of the said moving parts is made of an injection molded composite material and constituted of a mixture of polyester sulfone resin and 30% of glass fiber.

## Patentansprüche

1. Verfahren zur Bestimmung eines Verbundmaterials, aus dem bewegte Teile in einem hermetisch abgeschlossenen Kühlkompressor gebildet sind, dadurch gekennzeichnet, daß ein Verbundmaterial, dessen mechanische und thermische Anfangseigenschaften, die für ein nicht-korrosives Medium angegeben werden, den Bedingungen genügen, die durch die mechanischen und thermischen Beanspruchungen in einem Kompressor erzeugt werden, während einer ersten bestimmten Dauer (T1) in ein Medium eingebracht wird, welches die chemischen Produkte enthält, die sich in einem Kompressor bei einer Versuchstemperatur befinden, die der maximalen Arbeitstemperatur eines Kompressors entspricht, und daß nach Beendigung dieser ersten Dauer (T1) die mechanischen und chemischen Eigenschaften gemessen werden und mit den mechanischen und/oder chemischen Anfangseigenschaften verglichen werden, und durch Berechnung abgeschätzt wird, wie sie sein werden, wenn das Material in einer Kompressor-Umgebung während einer zweiten Dauer (T2), die länger als die erste Zeit (T1) ist, verwendet sein wird, und daß dann Teile aus diesem Material gebildet werden, wenn die geschätzten Eigenschaften den verlangten Eigenschaften nach einer Verwendungsdauer von der zweiten Dauer (T2) entsprechen.

2. Verfahren nach Anspruch 1, dadurch gekennzeichnet, daß der Versuch in einem Medium erfolgt, das Kühlfluid sowie Naphtenöl enthält.

3. Verfahren nach Anspruch 1, dadurch gekennzeichnet, daß die zweite Dauer (T2), die für die Abschätzung verwendet wird, wenigstens der Lebenserwartung eines Kompressors entspricht.

4. Verfahren nach Anspruch 3, dadurch gekennzeichnet, daß die zweite Dauer (T2) in der Größenordnung von 15 Jahren liegt.

5. Verfahren nach Anspruch 1, dadurch gekennzeichnet, daß die Versuchstemperatur in der Größenordnung von 200°C liegt.

6. Verfahren nach Anspruch 1, dadurch gekennzeichnet, daß der Versuch während einer ersten Dauer (T1) von sieben Tagen erfolgt.

7. Verfahren nach Anspruch 1, dadurch gekennzeichnet, daß das Abschätzen der Eigenschaften während der zweiten Dauer (T2) nur dann durchgeführt wird, wenn die mechanischen und die chemischen Eigenschaften, die nach Beendigung des Versuches gemessen werden, den verlangten Eigenschaften in einem Kompressor während der ersten Dauer (T1) genügen.

8. Verfahren nach Anspruch 7, dadurch gekennzeichnet, daß das Abschätzen der Eigenschaften während der zweiten Dauer (T2) nur dann durchgeführt wird, wenn die chemischen Eigenschaften während des Versuches nicht verändert worden sind.

9. Hermetisch abgeschlossener Kühlkompressor, der unter seinen bewegten Teilen wenigstens eine Pleuelstange, eine Kurbelwelle, einen Kolben sowie Klappen umfaßt, dadurch gekennzeichnet, daß wenigstens einer der Teile aus einem Verbundmaterial besteht, das den mechanischen Beanspruchungen, den Temperaturen sowie dem korrosiven Medium, das in den Kompressoren während der Lebensdauer des Kompressors herrscht, widersteht.

10. Hermetisch abgeschlossener Kühlkompressor nach Anspruch 9, dadurch gekennzeichnet, daß wenigstens eines der genannten bewegten Teile aus einem Spritzguß-Verbundmaterial gebildet ist und aus einer Mischung eines Polyimid-Harzes mit 30% Glasfasern besteht.

11. Hermetisch abgeschlossener Kühlkompressor nach Anspruch 9, dadurch gekennzeichnet, daß wenigstens eines der genannten bewegten Teile aus einem verdichteten Verbundmaterial gebildet ist und aus einer Mischung eines Polyimid-Harzes mit 65 % Glasfasern besteht.

12. Hermetisch abgeschlossener Kühlkompressor nach Anspruch 9, dadurch gekennzeichnet, daß wenigstens eines der bewegten Teile aus einem durch Abtrennen, Verdichten und Formen umgewandelten Verbundmaterial besteht und aus einer Mischung eines Glasfasern-Gewebes mit einem Polyimid-Harz gebildet ist.

13. Hermetisch abgeschlossener Kühlkompressor nach Anspruch 9, dadurch gekennzeichnet, daß wenigstens eines der bewegten Teile aus einem Spritzguß-Verbundmaterial gebildet ist und aus einer Mischung eines Sulfon-Polyester-Harzes mit 30% Glasfasern besteht.